# EUROPÄISCHE PATENTSCHRIFT

(11) **EP 3 022 743 B1**
(45) Veröffentlichungstag und Bekanntmachung des Hinweises auf die Patenterteilung: **22.01.2020**
(21) Anmeldenummer: 14732828.0
(22) Anmeldetag: 28.05.2014
(51) Int. Cl.: H01F 7/16, F16K 31/06

(54) **ELEKTROMAGNETISCHE VENTILVORRICHTUNG SOWIE SPULENTRÄGER**
ELECTROMAGNETIC VALVE DEVICE AND COIL FORMER
DISPOSITIF FORMANT SOUPAPE ÉLECTROMAGNÉTIQUE ET PORTE-BOBINE

(30) Priorität: 19.07.2013 DE 102013107743
(43) Veröffentlichungstag der Anmeldung: 25.05.2016
(73) Patentinhaber: ETO MAGNETIC GmbH, 78333 Stockach (DE)
(72) Erfinder: VINCON, Peter, 78333 Stockach (DE); BENDER, Stefan, 78234 Engen (DE)
(74) Vertreter: Patentanwälte Behrmann Wagner PartG mbB
(86) Internationale Anmeldenummer: PCT/EP2014/061183
(87) Internationale Veröffentlichungsnummer: WO 2015/007425

(56) Entgegenhaltungen:
- US-A- 4 639 704
- US-A- 6 163 239
- US-A1- 2006 180 782

## Beschreibung

Die vorliegende Erfindung betrifft eine elektromagnetische Ventilvorrichtung nach dem Oberbegriff des Hauptanspruchs, wie sie aus der US 2006/0180782 A1 bekannt ist. Ferner betrifft die vorliegende Erfindung einen Spulenträger zur Realisierung einer elektromagnetischen Stellvorrichtung, insbesondere einer gattungsgemäßen elektromagnetischen Ventilvorrichtung.

Aus dem Stand der Technik ist es als allgemein bekannt vorauszusetzen, elektromagnetische Stellglieder zur Ventilsteuerung einzusetzen. Konkret wird ein derartiges elektromagnetisches Stellglied realisiert aus einer Ankereinheit, welche relativ zu einer stationären Kern- und einer stationären Spuleneinheit als Reaktion auf die Bestromung dieser Spuleneinheit bewegbar ist, wobei typischerweise eine derartige elektromagnetische Stellvorrichtung (auch als Aktuator bezeichnet) konstruktiv so ausgestaltet ist, dass die Spuleneinheit, realisiert aus einem (typischerweise als Kunststoff-Spritzteil ausgebildeten) Spulenträger mit darauf vorgesehener, geeignet zu bestromender Wicklung, die Ankereinheit umschließt und so in ihrem freien Innenraum einen Anker-Bewegungsraum ausbildet. Die dementsprechend entlang einer axialen Längsrichtung (welche typischerweise gleichermaßen eine Symmetrieachse einer radialsymmetrischen Spuleneinheit ist) bewegbare Ankereinheit besitzt typischerweise axial-endseitig einen als Elastomerkissen ausgebildeten Verschlussabschnitt, der, entsprechend einer jeweiligen axialen Ankerposition, einen axial auf die Ankereinheit ausgerichteten und typischerweise stationären Ventilsitz eines als gattungsgemäß bekannten Elektromagnetventils freilegt und somit öffnet bzw. verschließt.

Eine derartige, als bekannt vorausgesetzte Technologie wird für verschiedenste Einsatzzwecke ausgestaltet und ist insbesondere auch unter Großenserien-Gesichtspunkten günstig herstell- bzw. fertigbar.

Nicht zuletzt aus diesen Gründen hat sich die vorstehend beschriebene Technologie auch in Automobilen- bzw. Kraftfahrzeuganwendungen durchgesetzt und löst verschiedenste Stell- bzw. Ventilaufgaben, so etwa als Fluidventil für eine Kraftfahrzeug-Luftfederung.

Gerade jedoch der mobile Einsatz stellt besondere Anforderungen an derartige elektromagnetische Ventilvorrichtungen. So kommt es etwa im Motorraum, im Fahrzeug-Unterbereich oder anderen exponierten Einbauräumen zu besonderen Verschmutzungssituationen, was dazu führt, dass in unerwünschter Weise Störmedien, etwa Wasser, Staubpartikel oder andere Substanzen, durch Ventilauslässe (etwa übliche Entlüftungs- bzw. Drainageöffnungen) in gattungsgemäße Ventilvorrichtungen eindringen und so zu Betriebsstörungen führen bzw. gar eine potenzielle Verringerung von Stand- bzw. Betriebszeiten bewirken. Gleichzeitig ist es jedoch häufig nicht möglich, etwa durch konstruktive Verkleinerung von Entlüftungs- bzw. Drainagequerschnitten ein derartiges, unerwünschtes Eindringen von Fremdstoffen zu verhindern, da derartige Maßnahmen sich nicht nur nachteilig auf dynamische Eigenschaften und damit das Betriebsverhalten der Ventilvorrichtungen auswirken, auch ist etwa bei (üblichen) mehrteiligen Systemen dann die Montage bzw. Ausrichtung von Entlüftungs- bzw. Drainagekanälen erschwert.

Ein weiterer technischer Nachteil der oben beschriebenen, als gattungsbildend vorausgesetzten Technologie liegt darin, dass bei zunehmend kompakteren Anordnungen (etwa bedingt durch sich verkleinernde Bauräume in einem Montagekontext) eine zunehmend präzisere Ausrichtung der Ankereinheit samt Verschlusselement (also etwa elastomeren Verschlusskörper) relativ zum Ventilsitz erforderlich ist; bei kleinen Radialabmessungen können sonst bereits Toleranzen zu Undichtigkeiten und damit Fehlfunktionen von auf diese Weise realisierten Ventilvorrichtungen führen. Dies ist insbesondere dadurch von Belang, dass bei aus dem Stand der Technik bekannten Vorrichtungen der Ventilsitz bzw. eine den Ventilsitz realisierende Baugruppe einerseits und die Ankereinheit samt umgebender Spulen-Infrastruktur andererseits verschiedene Baugruppen sind, die ggf. auch noch zusätzlich verschiedenen Toleranzbedingungen bzw. Umgebungseinflüssen unterliegen. Vor diesem Hintergrund und dem Bestreben, nach wie vor möglich kompakte (d.h. insbesondere auch in radialer Richtung bzw. im Durchmesser minimierte) elektromagnetische Ventilvorrichtungen der gattungsbildenden Art zu realisierten, ist es daher Aufgabe der vorliegenden Erfindung, eine elektromagnetische Ventilvorrichtung nach dem Oberbegriff des Hauptanspruchs im Hinblick auf optimierte Bedingungen für eine Justage bzw. Montage zu verbessern, gleichzeitig für einen optimierten Verschluss im Zusammenwirken zwischen der Ankereinheit bzw. deren Verschlussabschnitt und einen zugeordneten Ventilsitz zu sorgen, und zusätzlich möglichst weite Durchtritts- bzw. Flussquerschnitte sowohl für das mit der Ventilvorrichtung zu schaltende Fluid, als auch für etwaige, für eine Drainage vorzusehende und auszulassende Fluide vorzusehen. Zusätzlich soll die so zu verbessernde Ventilvorrichtung in verbesserter Weise gegen das unerwünschte Eindringen von Störmedien geschützt sein.

Die Aufgabe wird durch die elektromagnetische Ventilvorrichtung mit den Merkmalen des Hauptanspruchs gelöst; vorteilhafte Weiterbildungen der Erfindung sind in den Unteransprüchen beschrieben. Unabhängiger Schutz im Rahmen der Erfindung wird zudem beansprucht für einen Spulenträger nach dem unabhängigen Anspruch 10, welcher sich insbesondere zur Realisierung der hauptanspruchsgemäßen elektrischen Ventilvorrichtung eignet, darüber hinaus aber auch für eine Vielzahl weiterer elektromagnetischer Stellvorrichtungen geeignet ist, insbesondere wiederum mit einem besonderen Schwerpunkt für damit zu realisierende Elektromagnetventile. Im Rahmen der vorliegenden Erfindung gelten zudem die in den Unteransprüchen beschriebenen vorteilhaften Weiterbildungen des Hauptanspruchs auch gleichermaßen anwendbar und weiterbildend für die Spulenträgervorrichtung gemäß unabhängigem Patentanspruch 10.

In erfindungsgemäß vorteilhafter Weise gestattet die vorliegende Erfindung zunächst das wirksame Ausbilden von für eine Drainage und/oder eine Entlüftung etwa des Ankerinnenraums dienenden Kanälen: Diese Kanäle werden erfindungsgemäß weiterbildend als Nuten bzw. Rillen in einem (bevorzugt hohlzylindrischen) Innenmantel des Wicklungsabschnitts des Spulenträgers gebildet, sodass der Spulenträger in diesem Bereich neben seiner Führungsrolle für die (dann gleichermaßen zylindrische) Ankereinheit die so miteinander zusammenwirkenden Mantelflächen umfangsseitig durch die Kanäle unterbricht. Zusätzlich weiterbildend werden diese axial endseitig (dem Einlass- bzw. Auslassabschnitt und damit dem Ventilsitz gegenüberliegend) über Sperr- bzw. Umleitmittel, etwa ein aus dem (Kunststoff-) Werkstoff des Spulenträgers realisiertes Material, geführt, welches in der lösungsgemäßen Weise vorteilhaft das unerwünschte Eintreten von Störmedien in diese Kanäle auch in einem verschmutzungsanfälligen Einsatzumfeld verhindert, zumindest ernsthaft erschwert. Vorteilhaft sorgt wiederum die bevorzugte Ausgestaltung des Spulenträgers als Kunststoff- Spritzteil für die Möglichkeit, mit geringstem Aufwand diese zusätzlichen Verbesserungen mit geringstmöglichem zusätzlichem Fertigungs- und Montageaufwand umzusetzen.

Wiederum vorteilhaft sieht die Erfindung vor, dass dem Spulenträger bevorzugt lateral benachbart Fluidführungsabschnitte vorgesehen sind, welche insbesondere das durch den bei einer Ventilöffnung freigelegten Übergangsbereich zwischen Einlass- bzw. Auslassabschnitt und Wicklungsabschnitt fließende Fluid seitlich an den Spulenmitteln entlang führen, bis zu geeigneten bodenseitigen Auslässen. Derartige Fluidführungsabschnitte werden erfindungsgemäß weiterbildend in Form von plattenförmigen Baugruppen realisiert, weiter bevorzugt selbst als Kunststoff-Spritzgussteile, wobei, wiederum mit dem Zweck eines erschwerten Eindringens von Störmedien, auf diese Weise Umlenk- bzw. Mäandermittel als Abschnitte der Fluidführung realisiert werden können, indem, durch ein weiter bevorzugtes Kunststoff-Spritzgussverfahren, derartige Erhebungen bzw. Vertiefungen in das Kunststoffmaterial eingebracht werden.

In erfindungsgemäß vorteilhafter Weise ist weiterbildungsgemäß dem Wicklungsabschnitt des Spulenträgers zusätzlich der erfindungsgemäße Einlass- und/oder Auslassabschnitt zugeordnet, welcher, insbesondere aus einer axialen Richtung von extern, das Ein- bzw. Austreten des mit der Ventilvorrichtung zu schaltenden Fluids ermöglicht und, diesem Ein- bzw. Austritt gegenüberliegend, in der Art eines Ventilsitzes einen Verschlusspartner für den Verschlussabschnitt der Ankereinheit anbietet, so dass in erfindungsgemäßer Weise bereits durch diesen integrierten Spulenträger eine Ausrichtung der Ankereinheit (samt Verschlussabschnitt) auf den Ventilsitz erfolgt. Mit anderen Worten, dadurch, dass erfindungsgemäß im Rahmen der Weiterbildung sowohl die Führung der Ankereinheit (innerhalb der diese umschließenden Spule, also innerhalb des Wicklungsabschnitts) integriert ist mit dem durch das Ventil zu verschließenden Einlass bzw. Auslass, wird sowohl ein Einbau der Ventilvorrichtung an einem Einsatzort, als auch eine Justage bzw. Einrichtung der Ventilfunktion im Zusammenwirken zwischen Verschlussabschnitt und Ventilsitz drastisch vereinfacht.

Dieser erfindungsgemäße Vorteil wird dann insbesondere dadurch weiter verbessert, dass, weiter bevorzugt im Wege eines Kunststoff-Spritzverfahrens oder dergleichen, der Spulenträger mit seinen Komponenten "Wicklungsabschnitt" und "Einlass- bzw. Auslassabschnitt" als gemeinsames, einstückiges Teil hergestellt wird.

Dabei hat es sich konstruktiv als besonders vorteilhaft herausgestellt, beide Komponenten über Stegabschnitte oder dergleichen Verbindungsabschnitte so miteinander zu verbinden, dass im Übergangsbereich zwischen dem Einlass- bzw. Auslassabschnitt und dem Wicklungsabschnitt breite Strömungsquerschnitte für Fluid entstehen, welches dann in einem Öffnungszustand des Ventils (d.h. der Verschlussabschnitt der Ankereinheit befindet sich in einem Abstand vom Einlass- bzw. Auslassabschnitt bzw. dem darin ausgestalteten Ventilsitz) ein strömungswiderstandsarmes Durchströmen des Ventils gestattet. Die weiter bevorzugt radialsymmetrische Ausgestaltung zumindest dieses Abschnitts des Spulenträgers führt dann zu einer Käfigform in diesem Übergangsbereich, welche mechanische Stabilität mit den beschriebenen günstigen Führungseigenschaften und einfacher automatisierter Fertigbarkeit verbindet.

Vorteilhaft und erfindungsgemäß weiterbildend realisiert der Einlass- bzw. Auslassabschnitt einen düsenartigen bzw. sich in Richtung auf das axiale Ende aufweitenden Kanal. Im aufgeweiteten Öffnungsbereich erfolgt dann die Verbindung zum eigentlichen Arbeitsraum des Ventils, also dem Zu- bzw. Abfluss des in das Ventil eintretenden Fluids, während am verjüngten Ende des Kanals, axial gegenüberliegend dem aufgeweiteten Bereich, dann ein als Ventilsitz dienender Bereich zum Zusammenwirken mit dem Verschlussabschnitt (z.B. Ventilgummi) der Ankereinheit ausgebildet ist.

Auf diese Weise entsteht so in überraschend einfacher und konstruktiv sowie herstellungstechnisch eleganter Weise eine elektromagnetische Ventilvorrichtung, welche die aus dem Stand der Technik bekannten Nachteile signifikant überwindet und insbesondere eine elektromagnetische Ventilvorrichtung schafft, welche bestmöglichen Schutz gegen unerwünscht eindringende Stör- und Fremdmedien kombiniert mit bestmöglicher (idealer) Kompaktheit und für eine ungehinderte Fluidströmung optimierten Durchlässen. Es wird deutlich, dass insbesondere im Großserieneinsatz sowie in der konkreten Montage bzw. Justage am Einsatzort eine derartig hergestellte elektromagnetische Ventilvorrichtung signifikante Aufwandsreduzierung bedeutet.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: einen Längsschnitt durch eine elektromagnetische Ventilvorrichtung gemäß einer ersten Ausführungsform der vorliegenden Erfindung in einem bestromten Öffnungszustand (d.h. es handelt sich beim ersten Ausführungsbeispiel um eine stromlosgeschlossene Ventilvorrichtung);
- Fig. 2: eine Längsschnittdarstellung des ersten Ausführungsbeispiels analog Fig. 1 in geöffnetem Ventilzustand mit durch Pfeile schematisch angezeigten Fluidflüssen;
- Fig. 3: eine teilweise abgeschnittene Perspektivansicht des erfindungsgemäßen Spulenträgers gemäß dem in Fig.1, Fig.2 beschriebenen ersten Ausführungsbeispiel sowie als Ausführungsbeispiel des unabhängig als Erfindung beanspruchten Spulenträgers;
- Fig. 4: eine Schnittansicht der Ventilvorrichtung der ersten Ausführungsform gemäß Fig. 1-3 aus der Perspektive der Fig. 1 im (stromlos-) geschlossenen Zustand; und
- Fig. 5, Fig.6: Perspektiv-Außenansichten der Ventilvorrichtung der ersten Ausführungsform gemäß Fig. 1-4 zum Verdeutlichen eines Fluidflusses im lateralen Mantelbereich der Spulenmittel (Fig. 5) bzw. zum Verdeutlichen eines Drainageaustritts im (axialen) Bodenbereich der Spulenmittel (Fig. 6).

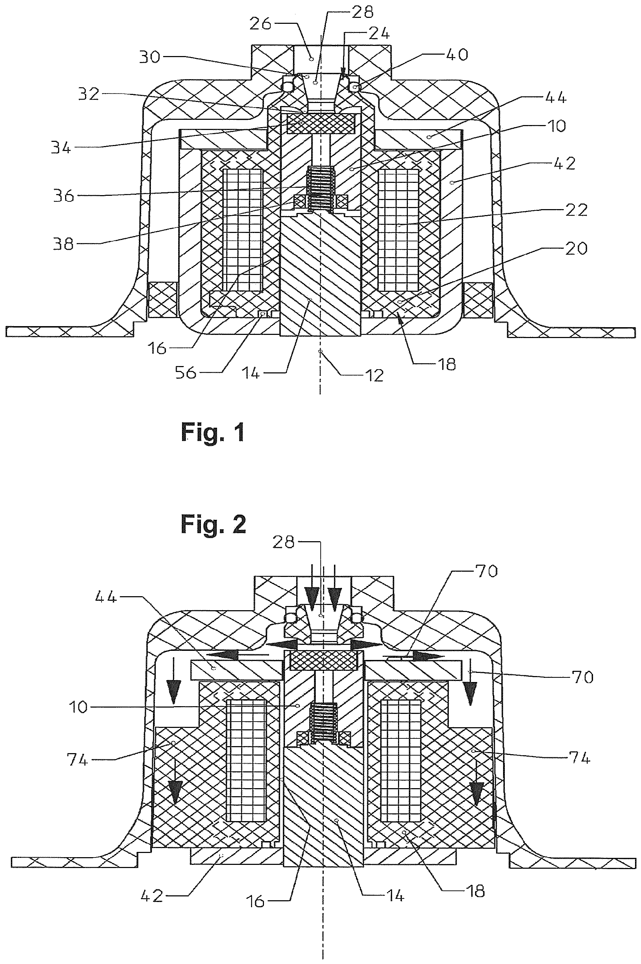

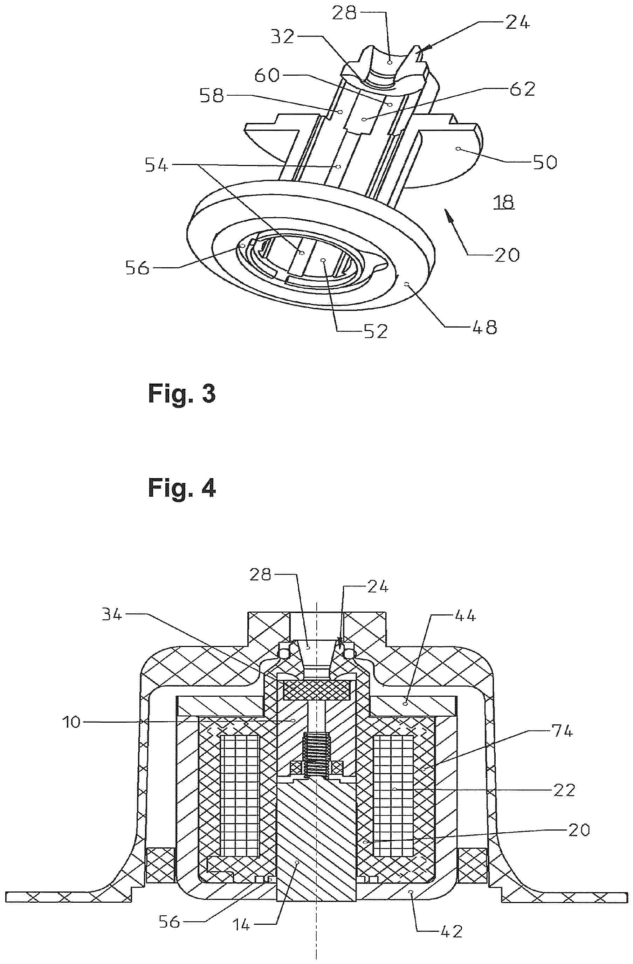

Eine einen zylindrischen Außenmantel aufweisende, weichmagnetische Ankereinheit 10 ist entlang einer axialen Richtung (Achse 12, gleichermaßen Symmetrieachse) relativ zu einer stationären Spuleneinheit und einer stationären Kerneinheit 14 bewegbar. Die Spuleneinheit weist dabei einen einen hohlzylindrischen Innen- bzw. Führungsraum 16 für die Ankereinheit anbietenden Spulenkörper 18 auf, welcher einen Wicklungsabschnitt 20 für eine (ansonsten bekannte) Wicklung 22 aufweist (und welche wiederum, in ansonsten bekannter Weise, zum Antreiben des Ankers 10 bestromt werden kann). Einstückig an den Wicklungsabschnitt 20 schließt sich axial endseitig des Spulenträgers 18 ein Einlass- bzw. Auslassabschnitt 24 an, welcher in eine in Richtung auf einen Ventil-Arbeitsraum 26 erweiterte Öffnung 28 eines Kanals 30 ausbildet. Dieser konische Kanal 30 bildet anderenends (d.h. der Öffnung 28 gegenüberliegend) einen sich düsenartig zuspitzenden Ventilsitz 32 aus, der, entlang der axialen Richtung 12, auf die Bewegungsrichtung der Ankereinheit 10 ausgerichtet ist. Konkret besitzt der Anker 10 in seinem auf den Ventilsitz 32 gerichteten Endbereich einen eingesetzten Ventilgummiabschnitt 34 als Verschlussabschnitt, so dass in der in Fig. 1, Fig. 2 gezeigten Schaltposition der Ventilvorrichtung die Ankereinheit den Ventilsitz 32 und mithin den Strömungskanal 28 des Einlass- bzw. Auslassabschnittes freilegt, während, vgl. in Fig. 4, der Anker in seinem angehobenen Bewegungszustand (entsprechend dem unbestromten Zustand der Wicklung 22) das Ventilgummi 34 den Ventilsitz 32 verschließt und so den Strömungskanal 28 dichtet.

Die Ankereinheit 10 wirkt in ansonsten bekannter Weise elektromagnetisch zusammen mit der Kerneinheit 14, wobei die im Ankerinneren vorgesehene und an einem Innenabschnitt sowie gegen den Kern 14 abgestützte Spiral-Druckfeder 36 die Ankereinheit und mithin das Ventilgummi in die geschlossene Position (Fig. 4) vorspannt. In die Ankereinheit 10 in Richtung auf die Kerneinheit 14 eingesetzte ringförmige Polymerkörper 38 dienen als Dämpfung eines Ankeraufpralls gegenüber der Kerneinheit 14 bei Bestromung der Wicklung 22.

Im (in den Figuren) oberen Bereich ist der einstückige Spulenträger 18 über eine Ringdichtung 40 gegenüber einer umgebenden Einbau-Gehäuse Infrastruktur abgestützt und abgedichtet. In ansonsten bekannter Weise umgibt ein magnetisch leitendes Gehäuse bestehend aus einer Gehäuseschale 42 und einem stirnseitigen Jochblech 44 den Spulenkörper und sorgt so für einen Elektromagnetfluss über die Ankereinheit bzw. den Kern, um in der vorbeschriebenen Weise die Ankereinheit axial anzutreiben.

Insbesondere die Perspektivansicht der Fig. 3 verdeutlicht weitere konstruktive Details des Spulenträgers 18. So wird zunächst deutlich, dass der Wicklungsabschnitt 20 begrenzt wird von einem ersten bodenseitigen Ringflansch 48 und einem oberen Ringflansch 50, so dass ein Wicklungsbereich für die Wicklung 22 entsteht. Im Innenbereich 16 ist eine hohlzylindrische Mantelfläche 52 ausgebildet, welche führend an einen Außenumfang des Ankerkörpers 10 angepasst ist. Zusätzlich gezeigt sind parallel zur axialen Richtung 12 verlaufende Drainagekanäle 54, welche als axial verlaufende Nuten in das Kunststoffmaterial des einstückigen, in Fig. 3 gezeigten Spulenträgers eingeformt sind und bodenseitig, im Bereich des unteren Flansches 48, in eine mittels vorspringender Ringstege 56 realisierte Labyrinthstruktur münden.

Dies erschwert, wie eingangs dargelegt, das Eindringen von Schmutz oder dgl. Störmedien in das Innere des Ankerraums, welcher durch die Drainagekanäle 54 gleichermaßen belüftet wie einer Drainage unterzogen werden kann.

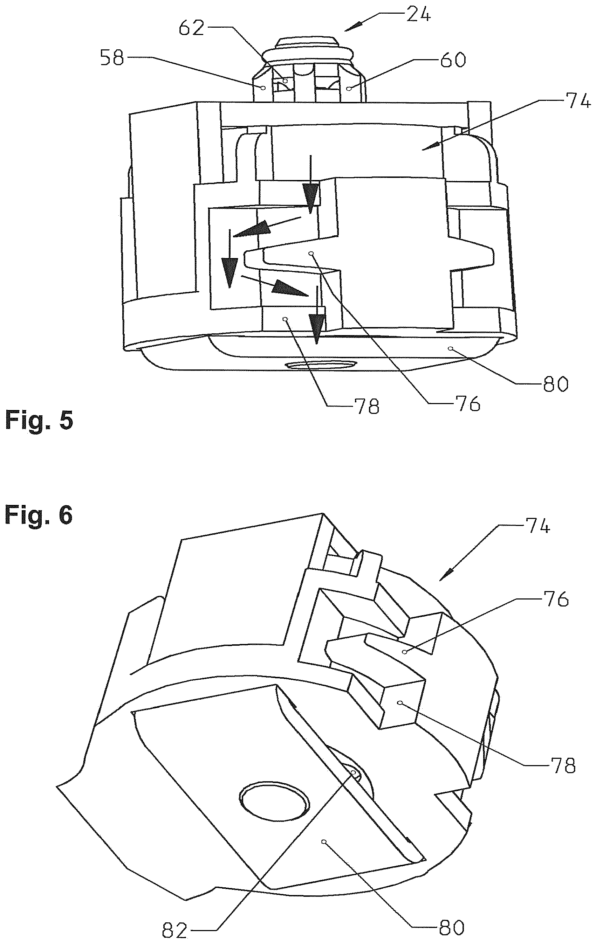

Im Ringflansch 48 axial gegenüberliegenden Einlass- bzw. Auslassabschnitt 24 des Spulenträgers ist zunächst in der gezeigten perspektivischen Schnittansicht deutlich der sich konisch zum Ventilsitz 32 verjüngende Strömungskanal 28 zu erkennen. Deutlich wird zudem, dass der Abschnitt 24 über zueinander parallel und achsparallel verlaufende Stege 58, 60 mit dem Wicklungsabschnitt 20 verbunden ist, wobei zwischen diesen Stegen zur Realisierung von Strömungsdurchlässen 62 vorgesehene freie Abstände bzw. Durchbrüche entstehen. In der radialsymmetrischen Ausgestaltung, siehe etwa Fig. 5, entsteht so eine Käfigstruktur zwischen dem Einlass- bzw. Auslassabschnitt 24 und dem mittels der Stege 58, 60 angebundenen Wicklungsabschnitt 20.

Die gegenüber der Darstellung der Fig. 1 axial um 90° verdrehte Längsschnittansicht der Fig. 2 verdeutlicht durch die gezeigten Pfeile den Fluidfluss durch die Ventilvorrichtung im Öffnungszustand des Ventils (d.h. in vertikaler Richtung axial abgesenkte Stellposition der Ankereinheit 10). Es wird deutlich, dass in den Kanal 28 einströmendes Fluid im geöffneten Zustand durch die freien Öffnungsabschnitte 62 des Käfigbereich zunächst radial austreten und dann wiederum in vertikaler Richtung abwärts (innerhalb einer umgebenden Einbauschale der Vorrichtung) geführt werden kann. Die Darstellung der Fig. 2 verdeutlicht zudem die zu diesem Zweck vorteilhaft vorgesehenen, lateral an dem Wicklungsabschnitt ansitzenden Fluidführungsbaugruppen 74 als Fluidführungsabschnitt, welche, vgl. die perspektivische Seitendarstellung der Fig. 5 bzw. der Fig. 6, als plattenartige Spritzgusselemente ausgestaltet sind in der in Fig. 5 gezeigten Weise einen mäanderartigen Fluidfluss (bedingt etwa durch Vorsprünge 76) erfordern und in der etwa in der Fig. 1 gezeigten Weise durch Aufsetzen bzw. Verkleben mit den Flanschen 50, 48 des Wicklungsabschnitts befestigt werden können.

Wiederum sorgt diese mäanderartige, labyrinthartige Fluidführung dazu, dass ein Eindringen unerwünschter Störmedien (Auslassbereich 78, gezeigt in Fig. 5, 6) zumindest erschwert ist.

Im Hinblick auf den bodenseitigen Auslass (Bezugszeichen 56 in Fig. 3) verdeutlicht die Fig. 6 zusätzlich, dass in einem Montagezustand eine den Boden fast vollständig abschließende Montageplatte 80 den Austritt aus der Drainagevorrichtung auf den Teilquerschnitt 82 vermindert.

Aus dem vorbeschriebenen Ausführungsbeispiel, welches in einer typischen Realisierung bei einem Ankerhub von ca. 1,1 mm, einem Ankerdurchmesser von 9mm und einer Gesamtlänge von 40mm in axialer Richtung eine Ventilvorrichtung realisiert, wird deutlich, dass neben deutlich verbessertem Schutz vor einem Eindringen von Fremdkörpern bzw. Fremdsubstanzen vor allem Herstellung, Montage und Justage drastisch vereinfacht sind. Dies führt dazu, dass ein typischer Außendurchmesser des Gehäuses (Fig. 1 bis Fig. 3) auf bis zu 30mm reduziert werden kann, so dass sich die vorliegende Erfindung insbesondere für beengte Bauräume in belasteten Umgebungen eignet, damit herausragende Eigenschaften etwa für den mobilen und Kraftfahrzeugbereich aufweist.

## Patentansprüche

1. Elektromagnetische Ventilvorrichtung mit
einer Ankereinheit (10), welche zum Durchführen eines Öffnungs- oder Schließvorgangs eines Fluidkanals ausgebildet ist,
die als Reaktion auf eine Bestromung von die Ankereinheit zumindest abschnittsweise umschließenden stationären Spulenmitteln (18, 20, 22) relativ zu diesen entlang einer axialen Richtung (12) bewegbar antreibbar ist,
wobei die Spulenmittel einen Spulenträger (14) aufweisen, der einen Wicklungsabschnitt (20) für eine mit der Bestromung zu versehende Wicklung (22) ausbildet, und
der Spulenträger, einen sich axial erstreckenden und zum Führen der Ankereinheit ausgebildeten Innenmantel ausbildet, in dessen Mantelfläche nut- oder rillenartige, und somit eine Drainage eines Anker-Bewegungsraums ermöglichende, Kanäle (54) eingeformt sind, wobei dem Spulenträger zu Ausbildung eines Abschnitts des Fluidkanals Fluidführungsabschnitte (74) zugeordnet sind, die radial auswärts angeordnet sind,
**dadurch gekennzeichnet,**
**dass** die Fluidführungsabschnitte (74) Umlenk- und/oder Mäandermittel (76) für eine Fluidführung aufweisen.

2. Vorrichtung nach Anspruch 1, **dadurch gekennzeichnet, dass** die Kanäle zumindest abschnittsweise achsparallel zur axialen Richtung (12) verlaufen und sich in einer koaxial und zum magnetischen Zusammenwirken mit der Ankereinheit am oder im Spulenträger vorgesehenen stationären Kerneinheit (14) fortsetzen.

3. Vorrichtung nach Anspruch 1 oder 2, **dadurch gekennzeichnet, dass** der Spulenträger axial einem Einlass- bzw. Auslassabschnitt (24) des Fluidkanals gegenüberliegend und endseitig einen Kanalauslass (56) für die Kanäle (54) anbietet.

4. Vorrichtung nach Anspruch 3, **dadurch gekennzeichnet, dass** dem Kanalauslass (56) Sperr- und/oder Umleitmittel gegen eintretende Störmedien in Form einer mittels vorspringender Ringstege (56) realisierten Labyrinthstruktur zugeordnet sind.

5. Vorrichtung nach einem der Ansprüche 1 bis 4, **dadurch gekennzeichnet, dass** der Spulenträger (18) an einem axialen Ende einen Einlass- und/oder Auslassabschnitt (24) des Fluidkanals ausbildet, der bevorzugt einstückig an dem Wicklungsabschnitt (20) ansitzt und durch einen axial endseitig an oder in der Ankereinheit vorgesehenen Verschlussabschnitt (34) verschließbar ausgebildet ist.

6. Vorrichtung nach Anspruch 5, **dadurch gekennzeichnet, dass** der Einlass- bzw. Auslassabschnitt (24) des Fluidkanals über Stegabschnitte (58, 60) käfigartig so mit dem Wicklungsabschnitt (20) verbunden ist, dass ein Fluidfluss von axial auswärts in den Einlass- bzw. Auslassabschnitt eintretenden Fluids in diesen Abschnitt erfolgen kann, wenn der Verschlussabschnitt nicht an den Einlass- bzw. Auslassabschnitt angreift.

7. Vorrichtung nach einem der Ansprüche 5 oder 6, **dadurch gekennzeichnet, dass** der Einlass- bzw. Auslassabschnitt einen bevorzugt düsenartig ausgebildeten und/oder sich axial endseitig aufweitenden Kanal (28) ausbildet, der axial in Richtung auf die Ankereinheit einen Verschlusssitz (32) zum Zusammenwirken mit dem Verschlussabschnitt (34) der Ankereinheit ausbildet.

8. Vorrichtung nach Anspruch 1, **dadurch gekennzeichnet, dass** die Fluidführungsabschnitte (74) als mantelseitig mit dem Wicklungsabschnitt verbundene Baugruppe, insbesondere Kunststoff-Spritzteil, realisiert sind.

9. Vorrichtung nach einem der Ansprüche 1 bis 8, **dadurch gekennzeichnet, dass** der Spulenträger als einstückiges Spritzteil aus einem Kunststoffmaterial realisiert ist.

10. Spulenträger zur Realisierung einer elektromagnetischen Ventilvorrichtung nach einem der Ansprüche 1 bis 9, mit einem zum Vorsehen einer Wicklung (22) ausgebildeten, sich entlang einer axialen Richtung (12) erstreckenden Wicklungsabschnitt (20), der einen zum Führen einer Ankereinheit (10) entlang der axialen Richtung ausgebildeten Innenraum (16) ausbildet, wobei der Spulenträger axial einends einen einstückig ansitzenden Einlass- und/oder Auslassabschnitt (24) so aufweist, dass eine in dem Innenraum geführte Ankereinheit (10)
in einer Verschlussposition einen axial innen liegenden Verschlusssitz (32) des Einlass- bzw. Auslassabschnitts verschließen kann
und in einer Öffnungsposition in den Einlass- bzw. Auslassabschnitt einströmendes Fluid durch eine Öffnung (62) oder einen Durchbruch des Spulenträgers zwischen dem Einlass- bzw. Auslassabschnitt und dem Wicklungsabschnitt hindurch treten kann, wozu der Spulenträger, einen sich axial erstreckenden und zum Führen der Ankereinheit ausgebildeten Innenmantel ausbildet, in dessen Mantelfläche nut- oder rillenartige, und somit eine Drainage eines Anker-Bewegungsraums ermöglichende, Kanäle (54) eingeformt sind, wobei dem Spulenträger zu Ausbildung eines Abschnitts des Fluidkanals Fluidführungsabschnitte (74) zugeordnet sind, die radial auswärts angeordnet sind, wobei die Fluidführungsabschnitte (74) Umlenk- und/oder Mäandermittel (76) für eine Fluidführung aufweisen.

## Claims

1. An electromagnetic valve device comprising
an armature unit (10) which is designed for carrying out an opening or closing operation of a fluid channel,
and which, as a reaction to stationary coil means (18, 20, 22), which at least partially surround the armature unit, being energized, is drivable so as to be moveable along an axial direction (12) relative to the coil means,
the coil means having a coil former (14) forming a winding section (20) for a winding (22) to be energized, and
the coil former forming an axially extending inner casing which is designed for guiding the armature unit and in the lateral surface of which slot- or groove-like channels (54) permitting drainage of an armature movement space are formed, fluid guide sections (74) being assigned to the coil former for the formation of a section of the fluid channel, the fluid guide sections being arranged radially outwards,
**characterized in that**
the fluid guide sections (74) have deflection and/or meander means (76) for fluid guidance.

2. The device according to claim 1, **characterized in that** at least in sections, the channels run axially parallel to the axial direction (12) and continue in a stationary core unit (14) provided coaxially and for magnetic cooperation with the armature unit on or in the coil former.

3. The device according to claim 1 or 2, **characterized in that** the coil former provides a channel outlet (56) for the channels (54) that is disposed axially opposite an inlet and/or outlet section (24) of the fluid channel and on the end face.

4. The device according to claim 3, **characterized in that** the channel outlet (56) is assigned blocking and/or deflection means against infiltrating intrusive media in the form of a labyrinth structure which is realized by means of projecting annular webs (56).

5. The device according to any one of claims 1 to 4, **characterized in that** the coil former (18) forms, at an axial end, an inlet and/or outlet section (24) of the fluid channel, which sits, preferably in one piece, on the winding section (20) and is constructed so as to be able to be closed by a closure section (34) provided axially on the end face on or in the armature unit.

6. The device according to claim 5, **characterized in that** an inlet and/or outlet section (24) of the fluid channel is connected to the winding section (20) via web sections (58, 60) in a cage-like manner so that fluid entering from axially outwards into the inlet and/or outlet section can flow into this section when a closure section does not engage on the inlet and/or outlet section.

7. The device according to claim 5 or 6, **characterized in that** the inlet and/or outlet section forms a channel (28) constructed in a nozzle-like manner and/or widening axially on the end face, said channel forming, axially in the direction of the armature unit, a closure seat (32) for cooperation with the closure section (34) of the armature unit.

8. The device according to claim 1, **characterized in that** the fluid guide sections (74) are realized as an assembly, in particular a plastic injection part, connected to the winding section at the casing.

9. The device according to any one of claims 1 to 8, **characterized in that** the coil former is realized as a one-piece injection part made of a plastic material.

10. A coil former for the realization of an electromagnetic valve device according to any one of claims 1 to 9, the coil former comprising a winding section (20) constructed for the provision of a winding (22), extending along an axial direction (12) and forming an interior space (16) designed for guiding an armature unit (10) along the axial direction,
the coil former having an inlet and/or outlet section (24) connected in one piece to one axial end thereof, so that an armature unit (10) guided in the interior space can close an axially internal closure seat (32) of the inlet and/or outlet section when in a closure position
and fluid flowing into the inlet and/or outlet section in an opening position can pass through an opening (62) or an aperture of the coil former between the inlet and/or outlet section and the winding section, for which purpose the coil former forms an axially extending inner casing which is designed for guiding the armature unit and in the lateral surface of which slot- or groove-like channels (54) permitting drainage of an armature movement space are formed, fluid guide sections (74) being assigned to the coil former for the formation of a section of the fluid channel, said fluid guide sections being arranged radially outwards,
the fluid guide sections (74) having deflection and/or meander means (76) for fluid guidance.

## Revendications

1. Dispositif de soupape électromagnétique comprenant
une unité d'induit (10) formée pour réaliser un processus d'ouverture ou de fermeture d'un canal de fluide,
ladite unité d'induit pouvant être entrainée de manière déplaçable par rapport à des moyens de bobine (18, 20, 22) fixes le long d'une direction axiale (12) en réaction à une alimentation en courant des moyens de bobine fixes qui enferment, au moins partiellement, l'unité d'induit,
les moyens de bobine ayant un support de bobine (14) qui forme une partie d'enroulement (20) pour un enroulement (22) qui doit être pourvu d'une alimentation en courant, et
le support de bobine formant une enveloppe intérieure qui s'étend axialement et qui est destinée à guider l'unité d'induit, des canaux (54) en forme de rainure ou de sillon étant formés dans sa surface d'enveloppe, lesdits canaux donc permettant de drainer un espace de déplacement d'induit, des parties de guidage de fluide (74) étant assignées au support de bobine pour former une partie du canal de fluide, les parties de guidage de fluide étant disposées radialement vers l'extérieur,
**caractérisé en ce que**
les parties de guidage de fluide (74) ont des moyens de renvoi et/ou de méandre (76) destinés à guider le fluide.

2. Dispositif selon la revendication 1, **caractérisé en ce que** les canaux s'étendent au moins partiellement parallèlement à l'axe de la direction axiale (12) et que les canaux continuent dans une unité de noyau (14) fixe qui est prévue de manière coaxiale sur ou dans le support de bobine pour l'interaction magnétique avec l'unité d'induit.

3. Dispositif selon la revendication 1 ou la revendication 2, **caractérisé en ce que** le support de bobine offre une sortie de canal (56) pour les canaux (54) opposée axialement à une partie d'entrée et/ou de sortie (24) sur l'extrémité.

4. Dispositif selon la revendication 3, **caractérisé en ce que** des moyens de blocage et/ou de déviation contre des milieux perturbateurs sont assignés à la sortie de canal (56) en forme d'une structure en labyrinthe qui est réalisée au moyen de nervures annulaires (56) en saillie.

5. Dispositif selon l'une quelconque des revendications 1 à 4, **caractérisé en ce que** le support de bobine (18) forme une partie d'entrée et/ou de sortie (24) du canal de fluide à une extrémité axiale, ladite partie d'entrée et/ou de sortie étant fixée, de préférence intégralement, sur la partie d'enroulement (20) et étant formée de manière fermable par une partie de fermeture (34) prévue sur l'extrémité axiale à ou dans l'unité d'induit.

6. Dispositif selon la revendication 5, **caractérisé en ce que** la partie d'entrée ou de sortie (24) du canal de fluide est reliée à la partie d'enroulement (24) par des parties de nervure (58, 60) sous la forme d'une cage de telle manière que du fluide pénétrant de l'extérieur, dans le sens axial, dans la partie d'entrée ou de sortie peut couler dans ladite partie si la partie de fermeture ne s'engage pas sur la partie d'entrée ou de sortie.

7. Dispositif selon la revendication 5 ou la revendication 6, **caractérisé en ce que** la partie d'entrée ou de sortie forme un canal (28), de préférence formé en forme de buse et/ou s'évasant à l'extrémité axiale, ledit canal formant un siège de fermeture (32) vers l'unité d'induit dans le sens axial pour l'interaction avec la partie de fermeture (34) de l'unité d'induit.

8. Dispositif selon la revendication 1, **caractérisé en ce que** les parties de guidage de fluide (74) sont réalisées comme assemblage, notamment comme pièce moulée par injection en matière plastique, relié à la partie d'enroulement sur le côté enveloppe.

9. Dispositif selon l'une quelconque des revendications 1 à 8, **caractérisé en ce que** le support de bobine est réalisé comme pièce moulée par injection en une seule pièce en matière plastique.

10. Support de bobine destiné à réaliser un dispositif de soupape électromagnétique selon l'une quelconque des revendications 1 à 9, comprenant une partie d'enroulement (20) formée pour réaliser un enroulement (22) et s'étendant le long d'une direction axiale (12), ladite partie d'enroulement formant un espace intérieur (16) destiné à guider l'unité d'induit (10) le long de la direction axiale,
le support de bobine ayant une partie d'entrée et/ou de sortie (24), qui est fixée intégralement à une extrémité axiale, de telle manière
qu'une unité d'induit (10) guidée dans l'espace intérieur peut fermer un siège de fermeture (32) de la partie d'entrée ou de sortie disposé à l'intérieur dans le sens axial dans une position de fermeture
et qu'un fluide qui s'écoule dans la partie d'entrée et/ou de sortie dans une position d'ouverture peut traverser une ouverture (62) ou une percée du support de bobine entre la partie d'entrée ou de sortie et la partie d'enroulement et c'est pour cette raison que le support de bobine forme une enveloppe intérieure qui s'étend axialement et qui est destinée à guider l'unité d'induit, des canaux (54) en forme de rainure ou de sillon étant formés dans sa surface d'enveloppe, lesdits canaux donc permettant de drainer un espace de déplacement d'induit, des parties de guidage de fluide (74) étant assignées au support de bobine pour former une partie du canal de fluide, les parties de guidage de fluide étant disposées radialement vers l'extérieur,
les parties de guidage de fluide (74) ayant des moyens de renvoi et/ou de méandre (76) destinés à guider le fluide.
